(19) Europäisches Patentamt / European Patent Office / Office européen des brevets

(11) **EP 3 878 706 A1**

(12) **EUROPEAN PATENT APPLICATION**

(43) Date of publication:
**15.09.2021 Bulletin 2021/37**

(51) Int Cl.:
**B60W 20/11** *(2016.01)*  **B60W 20/12** *(2016.01)*
**B60W 20/16** *(2016.01)*  **B60W 40/06** *(2012.01)*
**B60W 50/00** *(2006.01)*

(21) Application number: **20161747.9**

(22) Date of filing: **09.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **AVL POWERTRAIN UK LTD
Basildon
SS15 6SR (GB)**

(72) Inventor: **KIM, Bill
BRENTWOOD, CM15 8LZ (GB)**

(74) Representative: **Babeluk, Michael
Florianigasse 26/3
1080 Wien (AT)**

(54) **METHOD FOR CONTROLLING A HYBRID ELECTRIC VEHICLE**

(57) A method for controlling a hybrid electric vehicle, especially a plug in hybrid electric vehicle, that includes a drive train, an electric power source coupled to the drive train and a non-electric power source coupled to the drive train, comprises the steps of:
• retrieving trip route data,
• dividing the trip route into road segments (S1, S2, S3),
• performing a long-term speed prediction (108) and/or at least one short term speed prediction (208) for at least one segment (S1, S2, S3) based on the trip data,
• performing a global state of charge optimization (100) based on the long-term speed prediction (108), and/or performing a local state of charge optimization (200) based on the short-term speed prediction (208),
wherein a dynamic programming (DP) algorithm is used to determine the global state of charge optimization (100) and/or the local state of charge optimization (200).

The dynamic programming (DP) is based on following cost function:

$$J_k = a \cdot F_N + (1-a) \cdot E_N + b \cdot EM_N + c \cdot SoH_N,$$

wherein
$F_N$ is an instantaneous cost referring to the fuel consumption,
$E_N$ is an instantaneous cost referring to the electric energy consumption,
$EM_N$ is an instantaneous cost referring to the Emissions,
$SOH_N$ is the instantaneous cost referring to the battery degradation,
a is a weighting factor referring to the fuel consumption,
b is a weighting factor referring to the emissions,
c is a weighting factor referring to the battery degradation

EP 3 878 706 A1

*Fig.1*

**Description**

The present invention relates to a method for controlling a hybrid electric vehicle, especially a plug in hybrid electric vehicle, that includes a drive train, an electric power source coupled to the drive train and a non-electric power source coupled to the drive train, the method comprising the steps of:

- retrieving trip route data,
- dividing the trip route into road segments,
- performing a long-term speed prediction and/or at least one short term speed prediction for at least one segment based on the trip data,
- performing a global state of charge optimization based on the long-term speed prediction, and/or performing a local state of charge optimization based on the short-term speed prediction,
- wherein a dynamic programming algorithm is used to determine the global state of charge optimization and/or the local state of charge optimization.

Different types of technology are known that improve real-world $CO_2$ by using future route information from advanced GPS (Global Positioning System). For example, "ACC InnoDrive" (PORSCHE) or "Predictive Powermanagement" (BMW).

The "ACC InnoDrive" - which is described in the article "Assistance system for higher fuel efficiency.", Markschlager, Philip, et al. Auto Tech Review 1.12 (2012): 40-45 - is an Adaptive Cruise Control system (ACC) which optimizes vehicle speed based on future route information.

The "Predictive Power Management" - described in http://www.greencarcongress.com/2012/09/predictive-20120917.html - is a technology which the optimizes hybrid vehicle control with the aid of GPS information.

Both technologies are using available route information. But the "ACC InnoDrive" technology is limited because it can only work when ACC is on. The "Predictive Power Management" is intended for hybrid electric vehicles (HEV)) or plug-in hybrid electric vehicle (PHEV) regardless of ACC, but in terms of technological approach, the "Predictive Powermanagement" is based on a heuristic method which uses a predefined strategy that relies solely on road profile information from the GPS. While the "Predictive Powermanagement" is easy to implement and requires less computation effort, its solution is far from global optimal solution.

US 8 190 318 B2 describes a power management system and method of determining and applying power split ratios to power sources within hybrid vehicles to optimize state of charge (SOC) profile for only HEV mode with dynamic programming (DP) for each road segment to reach final SOC within target range. The power split ratio is determined using a two-scale dynamic programming technique to achieve optimal state of charge depletion over course of a trip. On the macro scale level, a global state of charge profile is created for the entire trip. On the micro-scale level, the state of charge profile and accompanying power split ratio is recalculated at the end of each segment as the vehicle proceeds along the trip.

First of all, the road is segmented with road information such as traffic signal, speed limit change and turn. And then the vehicle speeds are determined for each segment with a selected speed model, wherein "Simple model", "Gipps car following model", "gas-kinetic trip modeling", "historical and real-time traffic model" and "Multi-layer perceptron (MLP) neural network" are used for speed prediction. With predicted speed profile, two stage optimizations are carried out: Macro-scale and Micro-scale optimization. Macro-scale optimization is to create rough SOC profile based on predefined rule: finishing SOC closed to minimum SOC. And micro-scale optimization is to obtain optimal SOC for each segment with dynamic programming. Dynamic programming algorithm is used to determine the macro scale optimal SOC profile.

It is the object of the invention to improve real-world fuel consumption and emissions and to optimize energy management of hybrid vehicles.

This is achieved in accordance with the invention such a way that the dynamic programming is based on following cost function:

$$J_k = a \cdot F_N + (1 - a) \cdot E_N + b \cdot EM_N + c \cdot SoH_N,$$

wherein

    $F_N$ is an instantaneous cost referring to the fuel consumption,
    $E_N$ is an instantaneous cost referring to the electric energy consumption,
    $EM_N$ is an instantaneous cost referring to the Emissions,
    $SoH_N$ is the instantaneous cost referring to the battery degradation,
    a is a weighting factor referring to the fuel consumption,

b is a weighting factor referring to the emissions,
c is a weighting factor referring to the battery degradation.

According to a simple embodiment of the invention the weighting factor a=1 and/or the weighting factor c=0, wherein preferably the cost function simplifies to

$$J_k = F_N + b \cdot EM_N.$$

According to an embodiment of the present invention additionally the following steps are performed:

retrieving history data and real time data of a current driver,
performing a static driver style identification based on the history data of the current driver,
performing the long-term speed prediction considering the static driver style identification.

Alternatively or additionally, the following steps are performed:

retrieving real time data of a current driver,
performing a real time driver style identification based on the real time data of the current driver,
performing the short-term speed prediction based on the real time driver style identification.

Preferably for long term speed prediction and/or for short term speed prediction at least one Markov chain algorithm that takes driving style into account is used.

According to an embodiment of the invention additionally the following steps are performed:

retrieving map data including road gradients,
performing the long-term speed prediction and/or the short term speed prediction considering the map data.

In order to obtain realistic results, it is advantageous if speed limits, traffic lights, stop/yield signs, roundabouts and/or pedestrian crossings locations are considered in long term and/or short term speed prediction.

According to a further embodiment of the invention the local state of charge optimization is used when dynamic programming is running because it is the start of the trip, real SOC is deviating from optimal SOC trajectory from DP, real route is deviating from selected route, or vehicle load has changed, wherein preferably the DP algorithm is used for local state of charge optimization with final SOC constraint from global state of charge optimization.

According to an embodiment of the invention - dependent on predefined constraints - either a distance-domain adaptive optimization or a time-domain adaptive Optimization is performed as term optimization. For example, the distance-domain adaptive optimization is used for congestion charging areas or city center areas. The time-domain adaptive optimization can be used for certain times-of a day, when a toxic air alert - e.g., of an external environmental pollution control - is active or when an engine temperature of the combustion engine of the hybrid electric vehicle is cold.

Zero emission zones can also be considered in one of the following way:
According to an embodiment of the present invention a first and a second segment are defined in a region of the zero emission zone, with the first segment lying in the direction of travel before the Zero emission zone and the second segment in the zero emission zone, and that starting from a defined residual SOC at the end of the second segment, a start SOC at the beginning of the second segment is calculated and the start SOC is assigned to a target value SOC at the end of the first segment, and that an SOC optimization of the first segment with the target value SOC is performed as an end condition.

The advantage of the segmented approach is a computational benefit since the second segment is not optimized with dynamic programming.

Alternatively, a first and a second segment are defined in a region of the zero emission zone, with the first segment lying in the direction of travel before the zero emission zone and the second segment in the zero emission zone, and that - starting from a defined residual SOC at the end of the second segment - a SOC optimization for the second segment with the defined residual SOC as the end condition for purely electrical operation and for the first segment a SOC - Optimization for power split between electric motor and internal combustion engine operation is performed. The advantages of these embodiment are potentially improved results since optimization is done globally for whole route instead of separate optimizations for different segments.

Driver could potentially also be allowed to influence SOC constraints directly via HMI (Human Machine Interface) by being able to request for a certain end SOC for a trip. For example, driver might request a high end SOC if he knows that the following trip starts with a zero emission zone where battery energy needs to be available, or he might request a low end SOC if he knows that there will be a charging opportunity at his end destination and thus he can save fuel by encouraging battery depletion.

According to a preferred embodiment of the present invention at least one part of the calculation effort and/or at least one part of the data is outsourced to a cloud, wherein preferably the long term speed prediction and/or the global state of charge optimization and/or the history driver Data is/are outsourced to the cloud.

Energy management of electrified vehicles (e.g. HEV, PHEV) can be optimized if vehicle can predict future driving condition with connected technology as additional map database (e.g. ADAS e-Horizon) allow vehicle to receive future road information. This enables to improve fuel economy as well as emission for a certain route.

Using the method according to the present invention real-world fuel consumption and emissions by using future information from advanced GPS can be improved. As advanced GPS to acquire future information from multiple sources becomes available (e.g. ADAS e-Horizon) future vehicle velocity can be predicted in advance, thus allowing energy management strategy to be further optimized. Provided that the driver sets up a journey on the vehicle's navigation system, road information for the entire route such as road gradient, speed limit, and traffic lights, become available at the beginning of the journey.

The present invention comprises three main parts: future speed prediction, optimization and adaptive controller.

For future speed prediction, a Markov Chain algorithm that takes driving style into account is used; speed limits, traffic light and stop sign locations are considered in an iterative manner to meet the pre-defined criteria.

Dynamic programming (DP) is the long term window calculation technique chosen for global state of charge optimization. And to take emissions and electricity usage into account, multi-objective DP is used and adaptive weighting factors are used to reduce emission depending on location and time. A driver taking a wrong turn or approaching a traffic jam can cause the navigation system to reroute, which in turn introduces uncertainties in the speed prediction. To mitigate this issue, short-term speed prediction and local state of charge optimization are computed within a particular short-term road segment while long-term DP is rerun.

The adaptive controller consists of two parts, namely arbitration and adaptive control. The arbitration is to handle the afore mentioned scenario, which coordinate local and global state of charge optimization. And adaptive control is to execute optimal solution from optimization, which overwrites the existing rule-based controller.

The critical aspects considered are hardware requirements. As DP is compute-intensive algorithm and Markov Chain speed prediction algorithm requires more memory to store statistical data, it would require more CPU (central processing unit) and additional memory compared to conventional controller. For a solution to this problem, three hardware implementation cases are proposed with existing Electronic-Control-Unit (ECU), Navigation unit, and a cloud computing and/or storage device. For example, compute-intensive parts (e.g. long-term speed prediction and global state of charge optimization) can be executed in a cloud computing device, and the results can be transmitted to vehicle controller via wireless communication. This implementation has a benefit in terms of hardware specs of vehicle units, but there is additional transmitting time from the cloud to the vehicle to be considered.

According to the present invention smart GPS information (including road sign) as well as driving style are used to predict future speed profiles and to optimize fuel consumption and emissions for a selected cycle. Compared to existing energy management optimization for HEV/PHEV, the proposed technology allows HEV/PHEV controller to adapt to different road situations and driving styles. There are four main advantages and differences of the present invention compared to the aforementioned state of the art.

First of all, the dynamic programming algorithm not only considers fuel consumption but also at least emissions, preferably also electric energy consumption and/or battery degradation.

Secondly, the future speed prediction model is using iterative Markov Chain algorithm with driving style identification and road segmentation for a whole journey. Although previous researches for speed prediction are simply using one algorithm (neural networks, constant speed-acceleration, or gas kinetic model) which can only take into account history or future information, the iterative Markov Chain speed prediction of the present invention can consider past information (Markov Chain model) as well as future information (Iterative model). And also driving style can be taken into account; e.g., aggressive drivers tend to have higher acceleration and average speed, and vice versa for calm drivers.

Thirdly, in terms of optimization, the invention is combining long and short optimization to complement each other. Although dynamic programming can guarantee optimal solution for a whole journey given information, the problem is that the longer journey is harder to predict accurately. To mitigate this problem, a local state of charge optimization for each road segment is carried out, and an arbitration algorithm between global solution and local solution is implemented.

Last but not least, vehicle implementation is proposed by considering computation and memory requirement. Three units (ECU, navigation unit, and cloud storage or computing device) can be used to implement and the newly developed parts (future speed prediction, optimization and adaptive control) can be distributed to minimize hardware cost and to maximize fuel consumption improvement.

The invention will be explained in closer detail by reference to the drawings wherein:

Fig. 1 shows a schematic overview of the method according to the present invention;

Fig. 2 shows a raw flow chart of the present invention;

Fig. 3a shows a first detail of the flow chart shown in Fig. 2;

Fig. 3b shows a second detail of the flow chart shown in Fig. 2;

Fig. 3c shows a third detail of the flow chart shown in Fig. 2;

Fig. 4 shows a speed-distance diagram of an embodiment of the present invention;

Fig. 5 shows a SOC-distance diagram of an embodiment of the present invention;

Fig. 6 shows a SOC-distance diagram of another embodiment of the present invention;

Fig. 7 shows SOC-distance and fuel consumption-distance diagrams of an embodiment of the present invention;

Fig. 8 shows a map with a route example;

Fig. 9 shows a schematic overview of a speed prediction according to the present invention;

Fig. 10 shows schematic an example of a speed generating process according to the present invention;

Fig. 11 shows a detail of the example of the speed generating process shown in Fig. 10;

Fig. 12 shows a flow chart of an iterative segment speed generation process according to the present invention;

Fig. 13 shows a vehicle speed - distance diagram with main constraints for the computing time;

Fig. 14 to 16 show DP results conversion for existing PHEV Control;

Fig. 17 show an example for local state of charge optimization with SOC constraint from global state of charge optimization; and

Fig. 18 shows a vehicle speed - distance diagram with a sample for case sensitive strategy arbitration.

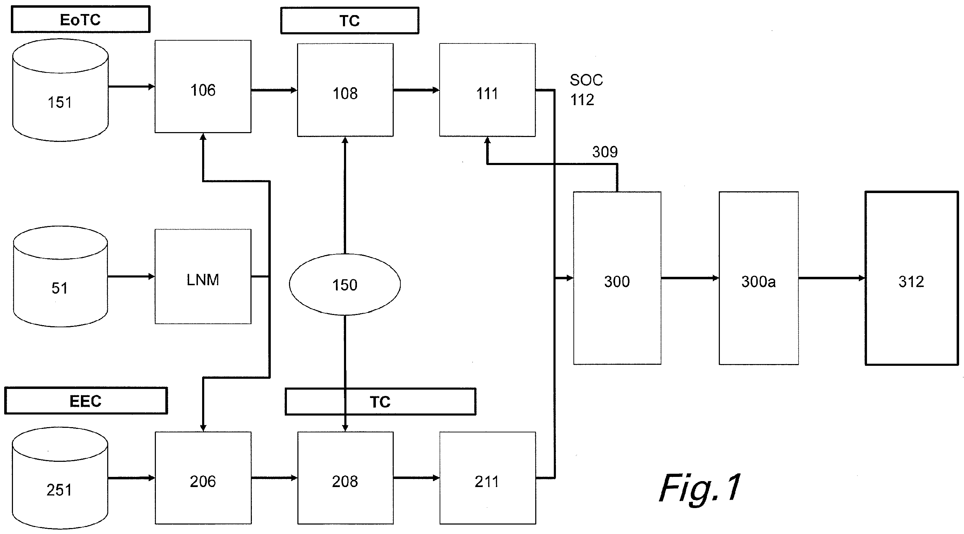

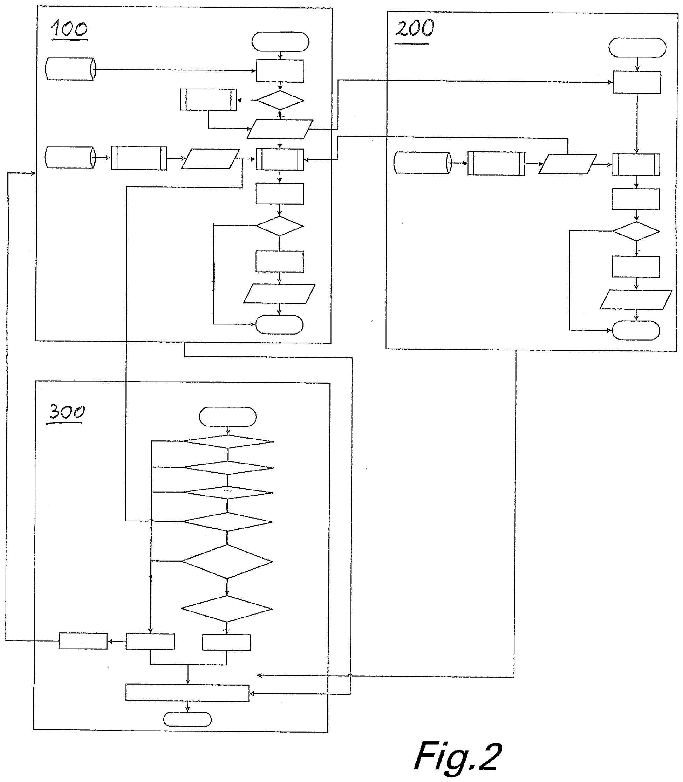

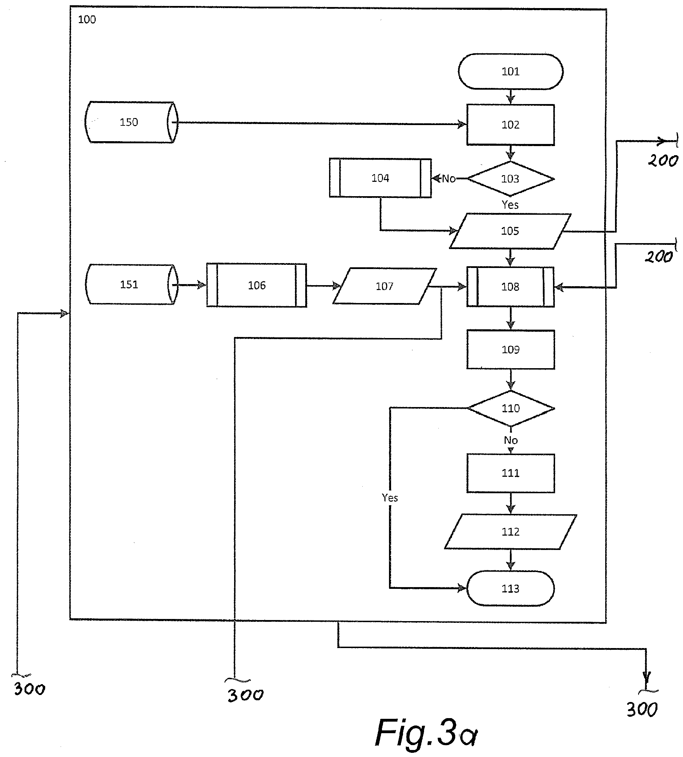

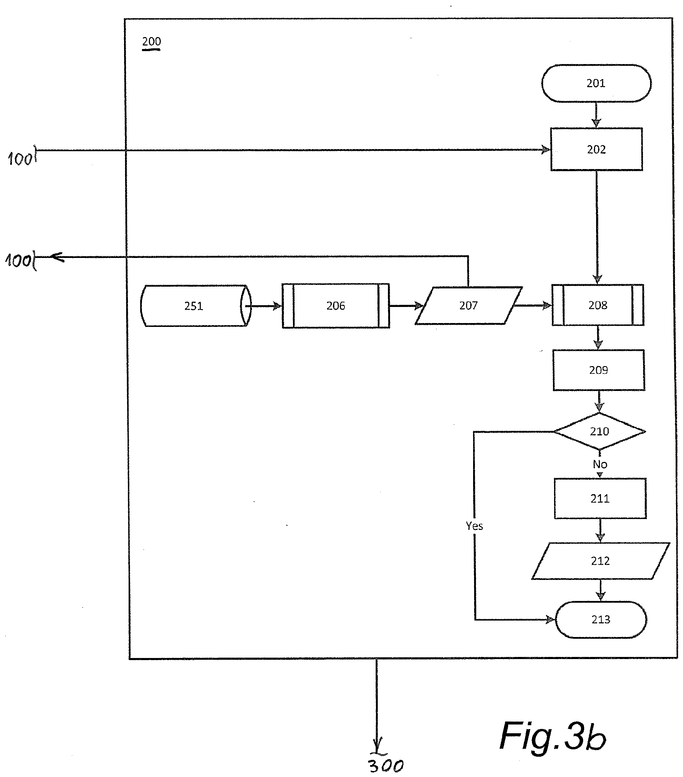

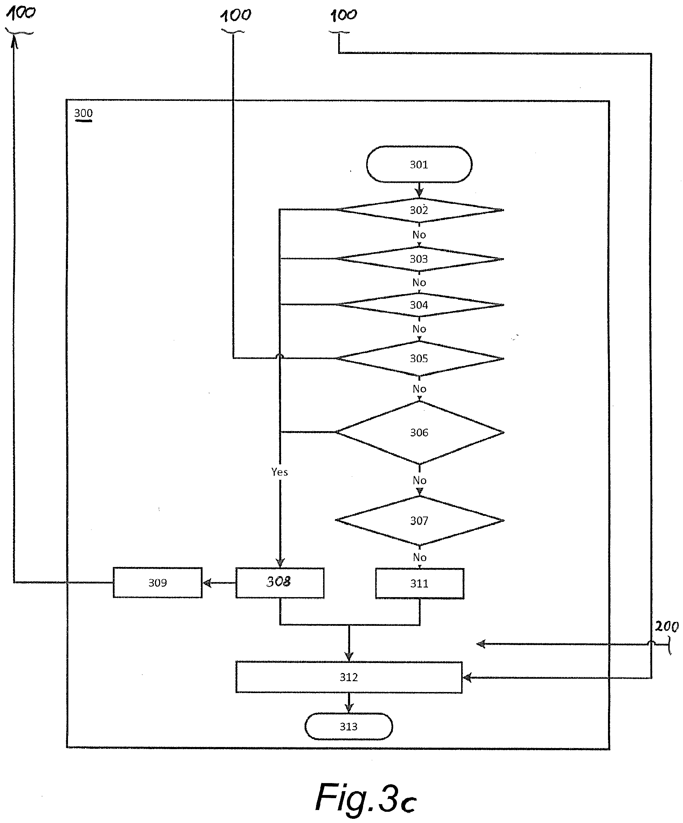

Fig. 1 shows an overview of the inventive method comprising End of-Trip Calculation, EoTC, Event-trigger Calculation TC and Every Event Calculation EEC. Fig. 2, 3a, 3b, 3c show a flow chart of the present invention comprising the computing blocks global state of charge optimization 100, local state of charge optimization 200 and arbitration/adaptive control 300 with tasks as follows:

1) Global state of charge optimization 100 (Fig. 1, 2, 3a): Finding global optimal control for whole journey

2) Local state of charge optimization 200 (Fig. 1, 2, 3b): Finding local optimal control for short time-window

3) Arbitration 300 (Fig. 1, 2, 3c)

- Selection between global and local state of charge optimization
- Static drive style update with real-time driver style if necessary
- Initiate global state of charge optimization if necessary

4) Based on arbitration 300 an adaptive Control 300a (Fig. 1) is performed: Convert optimal solution to applicable existing PHEV control

The flow chart of global state of charge optimization comprises following steps:
The global state of charge optimization procedure 100 starts with a driver route selection 101. In step 102 road data are retrieved for whole route using data of a map database 150, e.g., of an ADAS e-Horizon Database. Step 103 checks if a gradient is available. If not in step 104 a gradient calculation from GPS coordination is performed. 105 refers to road data e.g., speed limits, 151 refers to history data from a driver, i.e., data from different route for a certain period, for example two weeks. History data is part of an end of trip calculation EoTC. In step 106 a static driving style identification (S-DSI) is performed. On the basis of identified static driving style 107 and road data 105 the long term speed prediction 108 is performed. In step 109 power calculation is requested, wherein step 110 checks availability of electric drive energy. If the electric energy is too few, global state of charge optimization 111 is executed leading to a target SOC and a torque split ratio 112. 113 indicates the end of the global state of charge optimization procedure 100.

In the local state of charge optimization 200 the start of the journey 201 is followed by a step 202 retrieving a part of the road data for a short window (road segment). 251 refers to real time driving data from the outset of a journey. In step 206 a real time driving style identification (RT-DSI) is performed. On the basis of identified real time driving style 207 and part of the road data 202 the short term speed prediction 208 is performed. In step 209 power calculation is requested, wherein step 210 checks availability of electric drive energy. If the electric energy is too few, local state of charge optimization 211 is executed leading to a target SOC and a torque split ratio 212. 213 indicates the end of the local state of charge optimization procedure 200.

As shown in Fig. 1, the static driving style identification S-DSI of step 106 and the real time driving style identification RT-DSI of step 206 use machine learning and/or numerical methods LNM based on a customer dataset 51, e.g. data from one vehicle and different driver style.

After starting 301 of the arbitration/adaptive control procedure 300 several requesting steps 301, 302, 303, 304, 305, 306, 307 are conducted, wherein step 301 refers to route change request, 302 refers to a route change request, 303 refers to a traffic change request, 304 refers to request if air condition device (A/C) or heater is switched on. Step 305 checks if DSI is different from RT-DSI. In step 306 it is checked if the difference between a predefined speed and a real speed is larger than a threshold. Step 307 checks if the difference between a real SOC and a target SOC from global state of charge optimization procedure 100 is larger than a threshold.

In the case of a "yes" of one of the steps 301, 302, 303, 304, 305 or 306 in step 308 local optimization is selected and after that in step 309 a rerun of the global state of charge optimization 100 is performed. In the case of "no" in the steps 301, 302, 303, 304, 305, 306 and 307 in step 311 global state of charge optimization is selected directly.

In step 312 target SOC, torque split and PHEV mode are determined. 313 indicates the end of the arbitration/adaptive control procedure 300.

In step 104 of the global state of charge optimization procedure 100 a gradient of the route is calculated for example from a global positioning system (GPS) coordination:

$$Gradient\ (\%) = \frac{\Delta z}{\sqrt{\Delta x^2 + \Delta y^2}} \times 100,$$

wherein $\Delta x$, $\Delta y$, $\Delta z$ are differential coordination between two GPS positions.

According to step 110 or 210 electric vehicle availability (EV availability) is checked as follows:

1) Calculate battery depleting energy $E_{HV_{Depleting}}$, which is coming from wheel request energy $E_{Whl\_Pos\_req}$ and powernet energy $E_{Powernet}$:

$$E_{HV_{Depleting}} = \frac{E_{Whl\_Pos\_req}}{\eta_{TM} \times \eta_{Mot}} + \frac{E_{Powernet}}{\eta_{DCDC}}, \ with \ \ \eta : Effieiency, \ E : Energy$$

2) Calculate battery available energy $E_{HV_{Available}}$, which is coming from stored battery energy $\Delta SoE$ and recuperation energy $E_{Whl\_Negreq} \times \eta_{Recuperation}$:

$$E_{HV_{Available}} = \Delta SoE + E_{Whl\_Negreq} \times \eta_{Recuperation}$$

$$\eta_{Recuperation} = \frac{E_{HV_{Chg@Rec}}}{E_{Whl\_Neg\_req}} = \eta_{Braking} \times \eta_{TM} \times \eta_{Mot}$$

$$\eta_{Braking} = f(Driver\ style\ at\ Braking)$$

3) Compare battery depleting energy $E_{HVDepeleting}$ and battery available energy $E_{HVAvailabe}$ as follows:
if $E_{HVDepeleting} < E_{HVAvailabe}$, *All Electric driving,*
*Otherwise Blended mode (engine need to be on)*

The global state of charge optimization 100 uses a multi-objective dynamic programming (DP) algorithm which can calculate the optimal control strategy for whole route given request power as follows:

$$System\ equation:\ x_{k+1} = f(x_k, u_k),\ x: state\ variable,\ u: control\ sisgnal$$

$$Cost\ function:\ J_k = a \cdot Fuel_{Norm} + (1-a) \cdot Electricity_{Norm} + b \cdot Emission_{Norm} + c \cdot SoH_{Norm},$$

wherein

$F_N$ is an instantaneous cost referring to the fuel consumption,
$E_N$ is an instantaneous cost referring to the electric energy consumption,
$EM_N$ is an instantaneous cost referring to the Emissions,
$SoH_N$ is the instantaneous cost referring to the battery degradation,
a is a weighting factor referring to the fuel consumption,
b is a weighting factor referring to the emissions,
c is a weighting factor referring to the battery degradation.

The weighting factors a, b, c of the cost function can be defined depending on situation and strategy:
1) For diesel vehicle and/or emission control zone, weighting factor b for emissions can be bigger to reduce emissions;
2) If battery damage is detected, weighting factor c for battery degradation can be bigger to reduce battery damage;
3) Weighting factor a for fuel and electricity can be defined depending on SOC as follows:

| PHEV mode | Control factor | Cost weighting factor "a" |
|---|---|---|
| HEV mode | Torque split, (Gear) | 1 |
| Blended mode (EV-HEV) | Torque split, (Gear) | 0 < a < 1 |
| EV only | Gear | 0 |

With multi-objective Dynamic programming DP algorithm not only fuel consumption but also emissions can be taken into account.
The weighting between fuel and NOx is selected individually dependent from case and emphasis. For example, if NOx is important (e.g. urban), a higher NOx weighting is necessary, otherwise (e.g. highway) low NOx weighting can be used.
With multi-objective cost function, sensitivity studies for NOx weighting can be carried out, and fuel consumption and total NOx can be compared. Same methodology can be applied to other emissions, like CO, HC etc.
As NOx emissions in cities and during the day-time have significantly more impact on human health than NOx on highways or during the night-time, adaptive optimization with connected vehicle information is proposed:

• Distance-domain Adaptive Optimization: NOx optimization for congestion charging or city center areas

• Time-domain Adaptive Optimization: Increase NOx weighting for day-time, when toxic air alert is active or engine temperature is cold

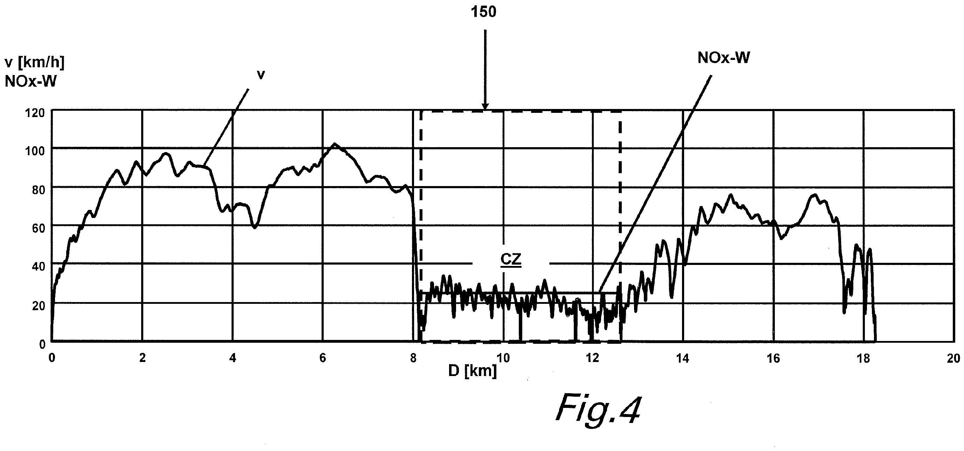

Fig. 4 show an example of a distance-domain adaptive optimization with the assumption that congestion charging or road type information is available from map database 150. In the diagram speed-v and NOx-weight NOx-W are plotted over distance D. CZ refers to a central zone with congestion charging.
Zero emission zones ZEZ (no emissions or CO2 allowed at all) can also be considered in one of the following two ways:

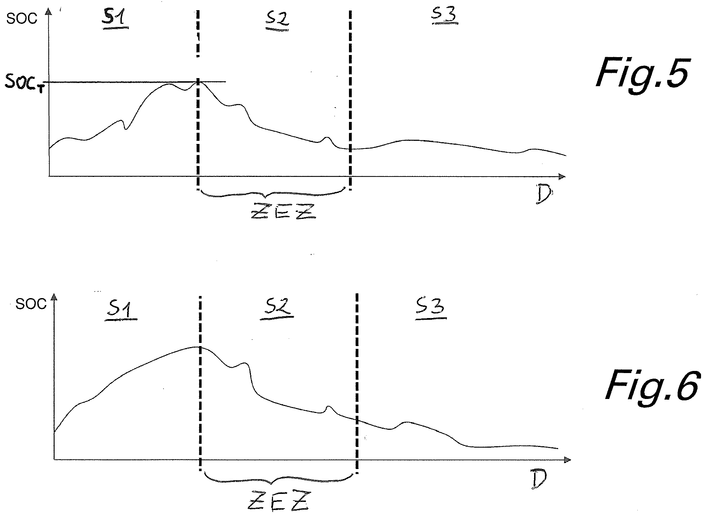

Segmented global state of charge optimisation 100 (Fig. 5)

A segmented global state of charge optimization 100 can be carried out as follows:

- Define target $SOC_T$ for end of a first segment S1: Assume a second segment S2 is finished with low SOC+ safety margin and then calculate backwards based on speed prediction and its corresponding propulsion power demand how much battery will be depleted during segment S2
- Optimise the first segment S1, using target state of charge $SOC_T$ as end constraint
- A Segment S3 is optimised in usual way with assumed initial SOC for the beginning of the segment S3 corresponding to estimated end SOC after all-electric driving of the second segment S3.

Advantage of segmented approach: Computational benefit since segment B is not optimised at all with dynamic programming.

Local state of charge optimisation 200 with additional zero emission zone ZEZ constraint (Fig. 6):

- Local state of charge optimization 200 with additional zero emission zone constraint simply use normal dynamic programming optimization method for entire route (segments S1, S2, -S3) but with additional constraint for zero emission zone ZEZ where only allowed engine/e-machine torque split is full electric mode. The dynamic programming DP algorithm in this way will automatically eliminate any control sequences that do not comply with zero emission zone ZEZ requirement such as sequences that do not have sufficient SOC when arriving at start of the second segment S2.
- Advantage: Potentially improved results since optimization done globally for whole route instead of separate optimizations for different segments

The driver could potentially also be allowed to influence SOC constraints directly via a human-machine-interface (HMI) by being able to request for a certain end SOC for a trip. For example, the driver might request a high end SOC if he knows that the following trip starts with a zero emission zone ZEZ where the battery energy needs to be available, or he might request a low end SOC if he knows that there will be a charging opportunity at his end destination and thus he can save fuel by encouraging the battery depletion.

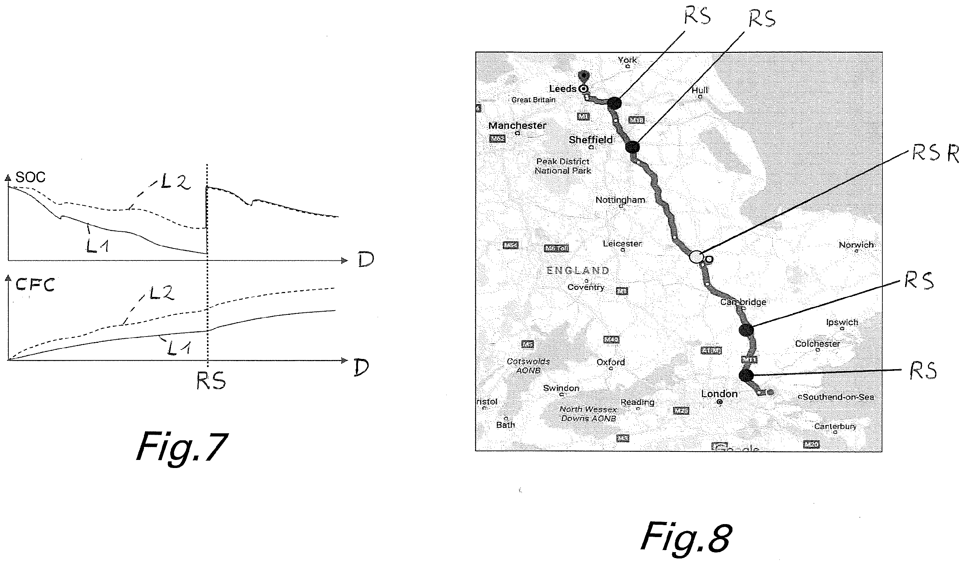

Fig. 7 shows diagrams wherein state of charge of the battery and the cumulative fuel consumption CFC are plotted over the drive distance D of the vehicle. Lines L1 show a situation wherein the location of a recharging station RS is known. Line L2 show a situation without any additional information on recharging stations RS. As shown in Fig. 7 operating costs could be further lowered if electric charging location and charger compatibility information is available from map database 150. Optimization algorithm's SOC constraints can be modified to encourage vehicle to deplete the battery (thus using less fuel) before arriving at the recharging station RS.

As indicated in Fig. 8 There may be several possible recharging stations RS available on the route, therefore specific recharging location needs to be identified in advance. Fig. 8 shows a map with compatible refuel and recharge Stations RS along a route, including one recommended or most probable refuel and recharge station RSR.

The identification of a specific recharging location could be done either by

1) Recommending specific charging location(s) to driver at start of route via HMI which driver can accept or decline (thus providing information to optimization algorithm of driver's intentions);

2) Alternatively, most probable stop point could be estimated without any explicit input from driver;

3) Either of these could be based on information such as route distance, estimated driving time, remaining vehicle range and previous driver behaviour such as typical driving distance before taking a break and tendency to plug in vehicle if charging is available. For commercial vehicle applications, legal requirements for driver breaks could also be taken into account.

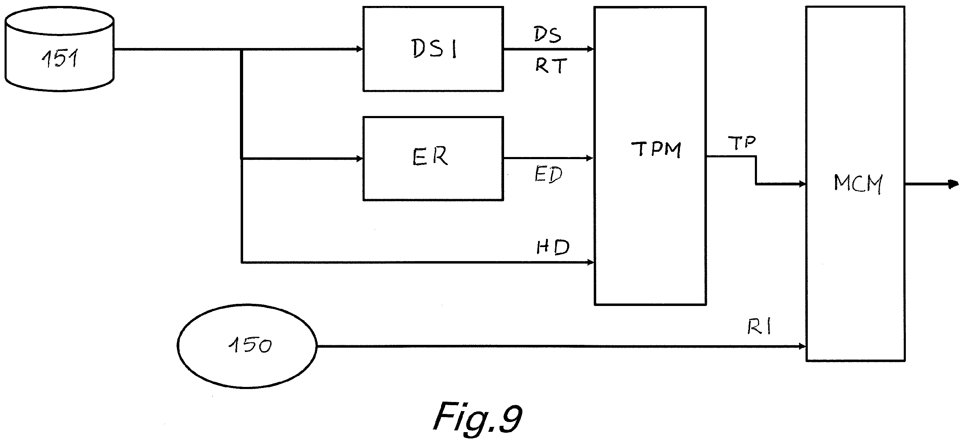

Fig. 9 shows schematic in detail the speed prediction process according to the present invention. History Data 151 which are stored for example in a cloud storage device are used to identify driving style DSI for each micro trip (road segment). An event recognition ER checks if there is a new event, e.g. a route setting, air conditioning switched on, etc. Driving style DS, road type RT, driving event data ED and history data HD feed a Transition Probability Matrix TPM which is used to estimate a transition probability TP. The transition probability TP and advanced navigation data of a map database 150, i.e., road info RI as speed limit, traffic light, stop sign etc. are fed to a Markov chain model MCM (Markov chain algorithm), which computes the predicted speed.

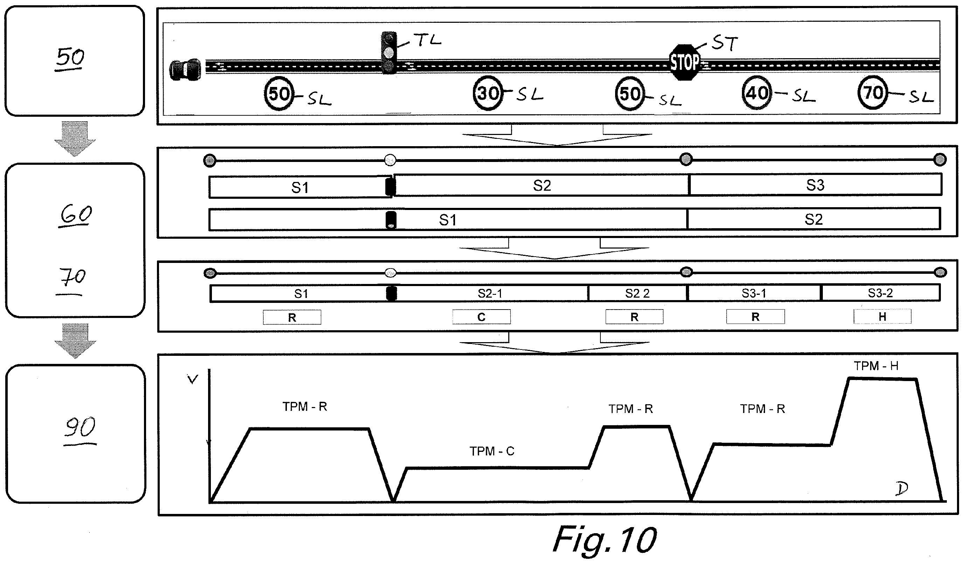

Fig. 10 shows schematic the speed prediction process on the basis of road segments S1, S2, S3, S2-1, S2-1, S3-1, S3-2. First in step 50 itinerary data with road information RI as speed limit SL, traffic light TL, stop sign ST etc. are retrieved from a map database 150, e.g., by ADAS-RP (Advanced Driver Assistance Systems Research Platform). HERE-ADAS-RP is a software framework for prototyping Map-Supported and Map-Enabled ADAS applications. The main components of this framework are Core Navigation (Map Display, Vehicle Positioning, Geocoding & Routing) and Road-Ahead Prediction (Electronic Horizon).

The map database provides essential information for the speed prediction:

- Legal speed limits SL as well as road curvature and gradient info that affects practical maximum driving speed

- Average traffic speed on route that limits driving speed

- Weather conditions (e.g. icy, wet, windy) which is likely to affect driving speed. Some similar information can also be inferred from other sources (e.g. ambient temperature from sensor or seasonal variation)

On the basis of ADAS-RP data in step 60 processing and step 70 segmentation in segments S1, S2, S3 and subsegments S2-1, S2-1, S3-1, S3-2 are performed. Finally, in step 90 the speed v for each segment S1, S2, S3 and subsegment S2-1, S2-1, S3-1, S3-2 is generated with transition probability matrix TPM for each segment.

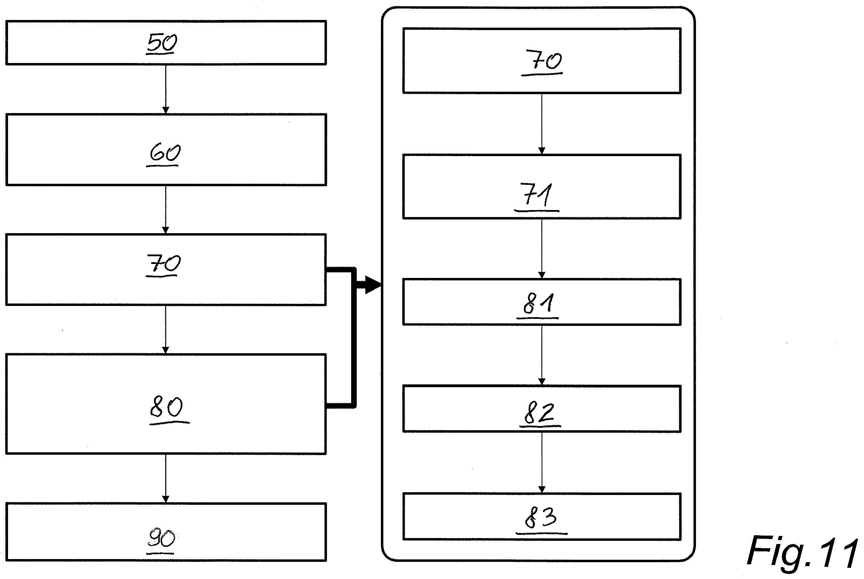

The segmentation 70 considers stop/yield signs, traffic lights, roundabouts and pedestrian crossings, as indicated by reference 71 in Fig. 11. Traffic light states, driving speed at roundabouts, pedestrian crossings and yield signs are determined statistically based on traffic light schedule and available map database information. The Sub-segmentation considers further speed limits, as indicated by reference 72 in Fig. 11.

After segmentation step 70, road type (e.g., city C, rural R, highway H), target average speed = f(speed limit, driving style) and events (e.g., stopping, braking event) are calculated in a pre-processing step 80, if not available from ADAS-RP. In Fig. 11 step 81 refers to road type calculation, step 82 to target average speed calculation and reference 83 to event calculation. After that in step 90 segment speeds v are generated iteratively with transition probability matrices TPM-R, TPM-C, TPM-Hy for each segment and subsegment S1, S2-1, S2-2, S3-1, S3-2 (Fig. 10, 11).

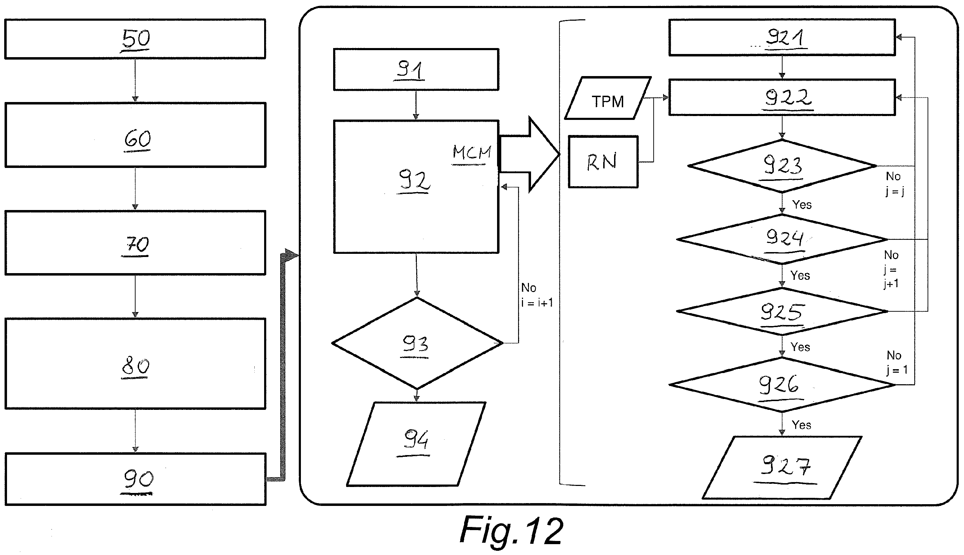

Fig. 12 shows a flow chart of an iterative segment speed generation 90 according to the present invention.

Reference 91 indicates an initialization step for iterative step i=1. In step 92 the speed of sub-segment i is computed by means of the Markov chain model MCM. Step 93 checks if i equals the number of total segments. If "no", the iteration is repeated. The result of step 94 is the speed profile for the whole trip. The Markov chain model MCM compresses following steps:

921: initialization (set initialization speed)

922: compute next state (j), based on transition probability matrix TPM and random number generation RN

923: check: vehicle speed $v <$ speed limit SL?

924: check: distance $>$ target distance $D_T$?

925: check: vehicle speed $v =$ end speed $v_{end}$?

926: check: average speed $v_{av} >$ average speed target $v_{avT}$?

927: result: speed profile for each subsegment i

For an iterative Markov chain model MCM, the computation time is mainly related to the number of iterations, which means the tighter constraints are set, the longer computation time. As constraints affect to accuracy of predicted speed, it is calibrated by taking into account both computation time and accuracy.

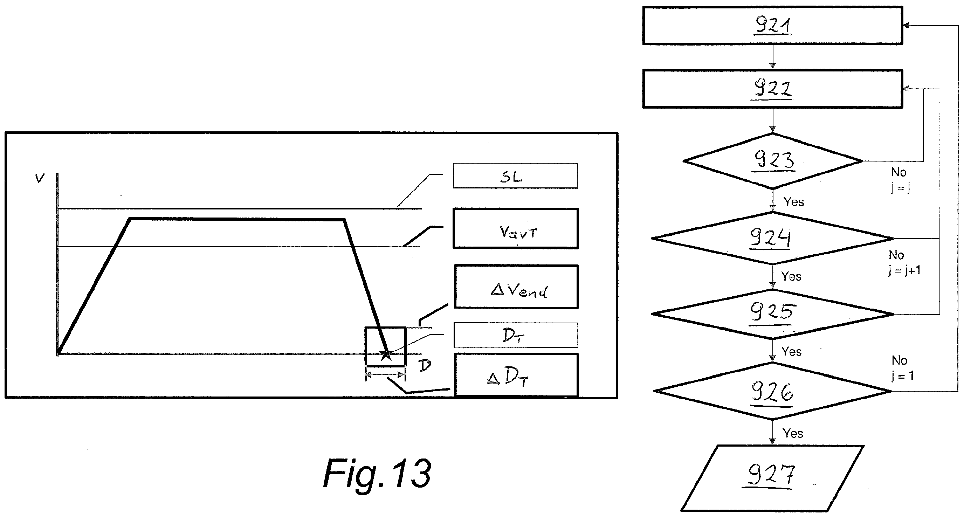

As indicated in Fig. 13, there are three main constraints, which are related to computation time:

- Target Distance allowance $\Delta D_T$: Distance range to finish computation for each segment, e.g. $\pm$ 3% of target distance $D_T$

- End Speed Allowance $\Delta v_{end}$: Speed range to finish computation for each segment, e.g. (0 ~ 10% of maximum speed)

- Average Speed Target $\Delta v_{avT}$: Average speed minimum target to finish computation for each segment

An adaptive controller converts dynamic programming DP results for existing PHEV control. There are different ways for DP results conversion:

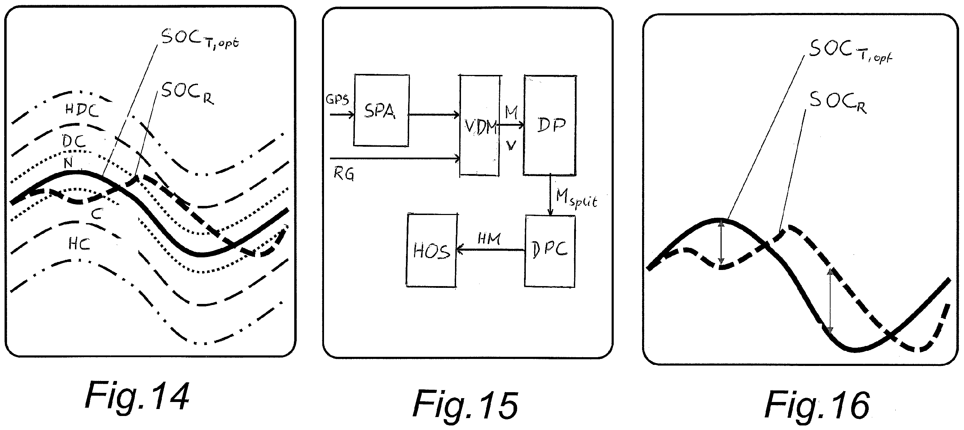

- SOC Fuzzy Control (Fig. 14): Depending on (Target state of charge $SOC_{T,opt}$ from dynamic programming DP - Real state of charge $SOC_R$) Rule-based control, e.g. Charge / Normal / Discharge control. In Fig. 14 HDC refers to high discharging; DC refers to discharging; HC refers to high charging; C refers to charging; N refers to normal state

- Motor Request Follower (Fig. 15): Directly use motor request power from dynamic programming DP when wheel request is positive. Dynamic programming DP is based on torque M and speed v of a vehicle-driver-model VDM which uses road gradient info RG and predicted speed $v_p$ of a speed prediction algorithm SPA based on global positioning info GPS. A DP-controller DPC converts torque split information $M_{split}$ between engine and electric motor to requests for electric machine power/hybride mode HM for a simulation controller HOS (kinds of signals for controller is depending on controller).

- Engine Power Modification (Fig. 16): Engine power = Wheel power + Battery request power (f(Target $SOC_{T,obt}$ - Current $SOC_R$))

Strategy arbitration 300:

Local state of charge optimization 200 is going to be used instead of global state of charge optimization 100 (dynamic programming solution) when DP computation is running either because it is the start of trip or:

- real state of charge $SOC_R$ is deviating from optimal target state of charge $SOC_{T,opt}$ trajectory from DP;

- real route is deviating from the selected route;

- vehicle load has changed e.g. heater on.

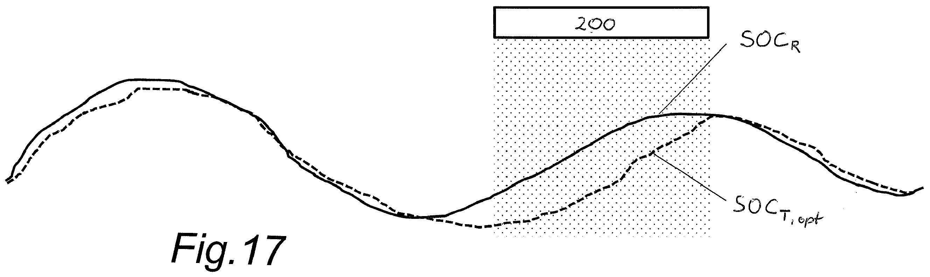

Fig. 17 shows real state of charge $SOC_R$ and optimal target state of charge $SOC_{T,opt}$ from dynamic programming. DP algorithm is used for local state of charge optimization 200 with final SOC constraint from global state of charge optimization 100 (Fig. 17).

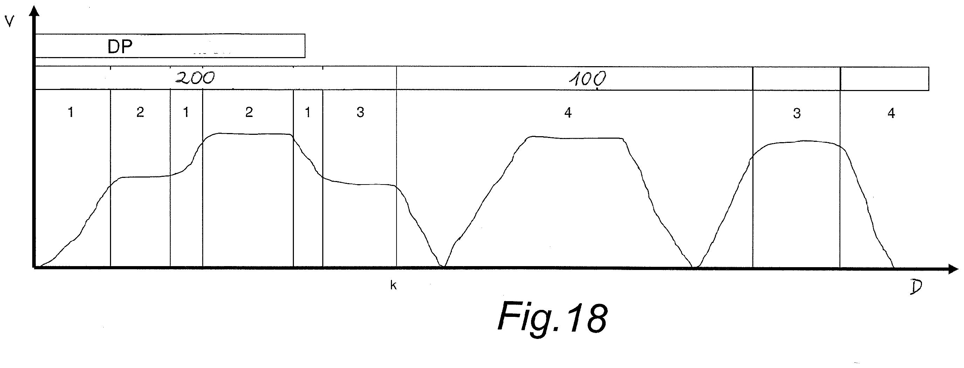

Fig. 18 shows a vehicle speed v - distance D - diagram with a sample for case sensitive strategy arbitration 300, wherein cases 1, 2, 3 and 4 are considered according to following schedule:

| Arbitration 300 | Case 1 Local optimal Acceleration / Deceleration | | Case 2 Local optimal cruise | Case 3 Local optimal transient | | Case 4 Global optimal |
|---|---|---|---|---|---|---|
| Global state of charge optimization 100 | DP computation on-going | | | DP computation done | | |
| Local Optimization 200 | CD | | Electric Vehicle mode | | | - |
| | CS | Cold | Existing Controller | | | |
| | | Hot | Electric Vehicle mode | DP run with $SOC_{end}$ = $SOC_{T,opt}$ | DP run with $SOC_{end}$ = $SOC_{global}(k)$ | |

In the schedule CD stands for Charging Depleting and CS stands for Charging Sustaining.

For example, for implementation in vehicle there are following ways:

1.) The individual functions and tasks can be divided between an ECU (or PHEV controller) and a navigation unit as follows:

a. ECU or PHEV controller:

- Adaptive Control 300a
- Global 100/ Local state of charge optimization 200,
- Long-term 108/ Short-term Speed Prediction 208
- History-151/ Real-time Driver Data 251.

b. Navigation unit:

- GPS
- Map database (e.g. ADAS e-Horizon) 150

2.) The individual functions and tasks can be divided between ECU (or PHEV controller) and navigation unit as follows:

a. ECU or PHEV controller 312:

- Adaptive Control 300a

b. Navigation unit:

- Global 100 / Local state of charge optimization 200,
- Long-term 108/ Short-term Speed Prediction 208
- History- 151/ Real-time Driver Data 251.
- GPS
- Map database (e.g. ADAS e-Horizon) 150

3.) The individual functions and tasks can be divided between ECU, navigation unit and a cloud device as follows:

a. ECU or PHEV controller 312:

- Adaptive Control 300a

b. Navigation unit:

- Local state of charge optimization 200,
- Short-term Speed Prediction 208
- Real-time Driver Data 251.
- GPS
- Map database (e.g. ADAS e-Horizon) 150

c. Cloud

- Global state of charge optimization 100,
- Long-term Speed Prediction 108
- History Driver Data 151.

**Claims**

1. A method for controlling a hybrid electric vehicle, especially a plug in hybrid electric vehicle, that includes a drive train, an electric power source coupled to the drive train and a non-electric power source coupled to the drive train, the method comprising the steps of:

   - retrieving trip route data,
   - dividing the trip route into road segments (S1, S2, S3),
   - performing a long-term speed prediction (108) and/or at least one short term speed prediction (208) for at least one segment (S1, S2, S3) based on the trip data,
   - performing a global state of charge optimization (100) based on the long-term speed prediction (108), and/or performing a local state of charge optimization (200) based on the short-term speed prediction (208),
- wherein a dynamic programming (DP) algorithm is used to determine the global state of charge optimization (100) and/or the local state of charge optimization (200),

**characterised in that**
the dynamic programming (DP) is based on following cost function:

$$J_k = a \cdot F_N + (1 - a) \cdot E_N + b \cdot EM_N + c \cdot SoH_N,$$

wherein

$F_N$ is an instantaneous cost referring to the fuel consumption,
$E_N$ is an instantaneous cost referring to the electric energy consumption,
$EM_N$ is an instantaneous cost referring to the Emissions,
$SoH_N$ is the instantaneous cost referring to the battery degradation,
a is a weighting factor referring to the fuel consumption,
b is a weighting factor referring to the emissions,
c is a weighting factor referring to the battery degradation.

2. The method according to claim 1, **characterised in that** the weighting factor a=1 and/or the weighting factor c=0, wherein preferably cost function simplifies to

$$J_k = F_N + b \cdot EM_N.$$

3. The method according to claim 1 or 2, **characterised in that** additionally the following steps are performed:

- retrieving history data (151) and real time data (251) of a current driver,
- performing a static driver style identification (106) based on the history data (151) of the current driver,
- performing the long-term speed prediction (108) considering the static driver style identification (106),
- wherein preferably for long term speed prediction (108) and/or for short term speed prediction (208) at least one Markov chain algorithm (MCM) that takes driving style into account is used.

4. The method according to one of the claims 1 to 3, **characterised in that** additionally the following steps are performed:

- retrieving real time data of a current driver (251),
- performing a real time driver style identification (206) based on the real time data of the current driver (251),
- performing the short-term speed prediction (208) based on the real time driver style identification (206).

5. The method according to one of the claims 1 to 4, **characterised in that** additionally the following steps are performed:

- retrieving map data (150) including road gradients (RG),
- performing the long-term speed prediction (108) and/or the short term speed prediction (208) considering the map data (150).

6. The method according to one of the claims 1 to 5, **characterised in that** speed limits (SL), traffic lights (TL), stop/yield signs (ST), roundabouts and/or pedestrian crossings locations are considered in long term (108) and/or short term speed prediction (208).

7. The method according to one of the claims 1 to 6, **characterised in that** local state of charge optimization (200) is used when dynamic programming (DP) is running and at least one of the following conditions are met:

- it is the start of the trip,
- a real state of charge ($SOC_R$) is deviating from optimal state of charge ($SOC_{T,opt}$) trajectory from dynamic programming (DP),
- a real route is deviating from selected route,
- a vehicle load has changed,

wherein preferably the dynamic programming (DP) algorithm is used for local state of charge optimization (200) with final SOC constraint from global state of charge optimization (100).

8. The method according to one of the claims 1 to 7, **characterised in that** a distance-domain adaptive optimization or a time-domain adaptive optimization is performed as global state of charge optimization (100), wherein preferably the distance-domain adaptive optimization is used for congestion charging areas or city center areas.

9. The method according to claim 8, **characterised in that** the time-domain adaptive optimization is used for certain times-of a day, when a toxic air alert - e.g., of an external environmental pollution control - is active or when an engine temperature of the combustion engine of the hybrid electric vehicle is cold.

10. The method according to any one of claims 1 to 9, **characterised in that** a first (S1) and a second segment (S2) are defined in a region of the zero emission zone (ZEZ), with the first segment (S1) lying in the direction of travel before the Zero emission zone (ZEZ) and the second segment in the zero emission zone (ZEZ), and that starting from a defined residual SOC at the end of the second segment (S2), a start SOC) at the beginning of the second segment (S2) is calculated and the start SOC is assigned to a target value SOC) at the end of the first segment (S1), and that an SOC optimization of the first segment (S1) with the target value SOC is performed as an end condition.

11. Method according to one of claims 1 to 9, **characterised in that** a first (S1) and a second segment (S2) are defined in a region of the zero emission zone (ZEZ), with the first segment (S1) lying in the direction of travel before the zero emission zone (ZEZ) and the second segment (S2) in the zero emission zone (ZEZ), and that - starting from a defined residual SOC at the end of the second segment - a SOC optimization for the second segment with the defined residual SOC as the end condition for purely electrical operation and for the first segment (S1) a SOC -Optimization for power split between electric motor and internal combustion engine operation is performed.

12. Method according to one of claims 1 to 11, **characterised in that** a local state of charge optimization (200) is carried out for each road segment (S1, S2).

13. Method according to one of claims 1 to 12, **characterised in that** an arbitration (300) algorithm checks constantly or at certain times whether triggering criteria for the implementation of the local state of charge optimization are fulfilled, wherein preferably local state of charge optimization (200) is demanded, short-term speed prediction (208) and local state of charge optimization (100) are computed within a short-term road segment while long-term DP is rerun.

14. Method according to one of claims 1 to 13, **characterised in that** at least one part of the computational effort and/or at least one part of the data is outsourced to a cloud, wherein preferably the long term speed prediction (108) computing and/or the global state of charge optimization (100) computing and/or storing of the history driver data (151) is/are outsourced to a cloud computing and/or storage device.

15. Method according to claim 14, **characterised in that** the results of computing and/or requested data are transmitted from the cloud computing and/or cloud storage device to a vehicle controller of the vehicle via a wireless communication.

*Fig. 1*

*Fig.2*

*Fig.3a*

Fig.3b

200

201

202

100

100

251 → 206 → 207 → 208

209

210

No

211

212

213

Yes

300

*Fig.3c*

Fig.4

Fig.5

Fig.6

*Fig.8*

*Fig.7*

22

*Fig.9*

Fig.10

Fig.11

Fig.12

Fig.13

Fig.14

Fig.15

Fig.16

EP 3 878 706 A1

EP 3 878 706 A1

200

$SOC_R$

$SOC_{T,opt}$

Fig.17

Fig.18

Europäisches
Patentamt

European
Patent Office

Office européen
des brevets

# EUROPEAN SEARCH REPORT

Application Number

EP 20 16 1747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 909 702 A (BEIJING INSTITUTE TECH) 30 November 2018 (2018-11-30) * the whole document * | 1-15 | INV. B60W20/11 B60W20/12 B60W20/16 B60W40/06 B60W50/00 |
| A | WO 2015/110129 A1 (VOLVO TRUCK CORP [SE]) 30 July 2015 (2015-07-30) * the whole document * | 1-15 | |
| A,D | US 8 190 318 B2 (LI YAOYU [US]; ISHIKAWA YOSUKE [US] ET AL.) 29 May 2012 (2012-05-29) * the whole document * | 1-15 | |
| A | EP 2 055 587 A2 (GM GLOBAL TECH OPERATIONS INC [US]) 6 May 2009 (2009-05-06) * the whole document * | 1-10 | |

TECHNICAL FIELDS
SEARCHED      (IPC)

B60W

The present search report has been drawn up for all claims

| Place of search | Date of completion of the search | Examiner |
|---|---|---|
| Munich | 15 September 2020 | Granier, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                       

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 1747

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2020

| Patent document cited in search report | | | Publication date | Patent family member(s) | | Publication date |
|---|---|---|---|---|---|---|
| CN 108909702 | A | | 30-11-2018 | NONE | | |
| WO 2015110129 | A1 | | 30-07-2015 | EP 3096991 A1 | | 30-11-2016 |
| | | | | US 2016339799 A1 | | 24-11-2016 |
| | | | | WO 2015110129 A1 | | 30-07-2015 |
| US 8190318 | B2 | | 29-05-2012 | US 2009259355 A1 | | 15-10-2009 |
| | | | | US 2009259363 A1 | | 15-10-2009 |
| | | | | WO 2009129106 A1 | | 22-10-2009 |
| EP 2055587 | A2 | | 06-05-2009 | CN 101445104 A | | 03-06-2009 |
| | | | | EP 2055587 A2 | | 06-05-2009 |
| | | | | US 2009118962 A1 | | 07-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8190318 B2

**Non-patent literature cited in the description**

- **MARKSCHLAGER ; PHILIP et al.** Assistance system for higher fuel efficiency. *Auto Tech Review,* 2012, vol. 1.12, 40-45

- *Predictive Power Management, http://www.green-carcongress.com/2012/09/predictive-20120917.html*